Europäisches Patentamt

European Patent Office

Office européen des brevets

(11) Numéro de publication: **0 369 882**
**A1**

## DEMANDE DE BREVET EUROPEEN

(21) Numéro de dépôt: 89403143.4

(51) Int. Cl.5: **A01G 17/14**

(22) Date de dépôt: **15.11.89**

(30) Priorité: **16.11.88 FR 8814881**

(43) Date de publication de la demande:
**23.05.90 Bulletin 90/21**

(84) Etats contractants désignés:
**DE ES IT**

(71) Demandeur: **CLEARPLAS FRANCE (société anonyme)**
**Zone Industrielle Route du Mans**
**F-61130 Belleme(FR)**

(72) Inventeur: **Burson, Alain**
**"Le Bois Fezedin" Serigny**
**F-61130 Belleme(FR)**
Inventeur: **Minot, Etienne**
**5, Chemin de la Fonderie l'Habit**
**F-27220 Saint Andre de l'Eure(FR)**

(74) Mandataire: **Lemoine, Robert et al**
**Cabinet Malémont 42, Avenue du Président Wilson**
**F-75116 Paris(FR)**

(54) Manchon pour la consolidation d'un piquet support de plante, notamment de vigne.

(57) Le manchon selon l'invention est destiné à consolider un piquet (1) support de plante, notamment de vigne, comportant au moins deux ailes (2a, 2b) formant un angle entre elles. Il se caractérise essentiellement en ce que sa paroi délimite un canal longitudinal (3) comportant au moins deux branches (3a, 3b) pour recevoir les ailes (2a, 2b) du piquet (1) et est pourvue de saillies internes (4a-4b ; 5a-5f) constituant des butées latérales pour les deux faces desdites ailes lorsque le piquet est enfilé dans le manchon

Grâce à ce manchon, il est possible de réutiliser des piquets rompus au niveau du sol soit accidentellement, soit sous l'effet de la corrosion.

FIG. 2

## Manchon pour la consolidation d'un piquet support de plante, notamment de vigne

La présente invention concerne un manchon pour la consolidation d'un piquet support de plante, notamment de vigne, comportant au moins deux ailes formant un angle entre elles.

Les piquets métalliques que l'on utilise pour soutenir des plantes subissent une corrosion relativement rapide au niveau du sol et finissent même par se rompre quelques années seulement après leur implantation.

Pour permettre une réutilisation des piquets ainsi rompus, certains constructeurs ont mis au point des manchons de consolidation destinés à être partiellement enfilés dans le sol autour de la partie du piquet qui demeure implantée, puis à recevoir l'autre partie du piquet dans le prolongement de la précédente.

Ces manchons ne donnent toutefois pas pleinement satisfaction. L'expérience montre en effet qu'ils n'assurent un maintien correct de la partie supérieure du piquet que si les dimensions des ailes de celui-ci sont précises et parfaitement adaptées aux dimensions de leur section.

La présente invention se propose plus particulièrement de remédier à cet inconvénient et, pour ce faire, elle a pour objet un manchon pour la consolidation d'un piquet support de plante, qui se caractérise en ce que sa paroi délimite un canal longitudinal comportant au moins deux branches pour recevoir les ailes du piquet et est pourvue de saillies internes constituant des butées latérales pour les deux faces desdites ailes lorsque le piquet est enfilé dans le manchon.

Grâce à cette disposition, les parties inférieure et supérieure d'un piquet rompu peuvent maintenant être fermement maintenues dans le prolongement l'une de l'autre. Ce piquet peut donc être réutilisé dans d'excellentes conditions.

Le manchon selon l'invention peut par ailleurs être utilisé en toute sécurité pour consolider des piquets dont les ailes ont des longueurs différentes, ce qui évite la réalisation de nombreux types de manchons et permet par conséquent de réduire notablement les coûts de fabrication.

Selon un mode de réalisation particulier de l'invention, les saillies internes du manchon sont des nervures longitudinales qui, tout en servant de butées latérales pour les faces des ailes du piquet, renforcent la structure du manchon.

Dans certains cas, une même branche du canal longitudinal du manchon peut comporter au moins deux nervures longitudinales se faisant face.

Dans d'autres cas, une même branche du canal longitudinal du manchon peut comporter au moins deux nervures longitudinales décalées latéralement l'une par rapport l'autre.

Par ailleurs, la paroi du manchon peut avantageusement être pourvue de trous sensiblement équidistants de ses extrémités qui permettent l'évacuation de l'eau de pluie.

Selon une autre caractéristique de l'invention, le manchon est effilé à l'une de ses extrémités et pourvu à son autre extrémité d'une bride de renforcement faisant saillie sur la face externe de sa paroi. Son extrémité effilée facilite bien entendu sa pénétration dans le sol autour de la partie du piquet qui demeure implantée. Quant à sa bride de renforcement, elle le rend plus résistant et autorise donc l'utilisation d'un outil à main pour l'enfoncer dans le sol.

D'autre part, le manchon peut avantageusement comporter, sensiblement à mi-distance de ses extrémités, au moins une nervure de renforcement périphérique faisant saillie sur la face externe de sa paroi, cette nervure périphérique pouvant en outre servir de butée pour limiter son enfoncement dans le sol.

Enfin, on notera que pour faciliter les opérations de fabrication et réduire les coûts de production, il est préférable de réaliser le manchon par moulage d'une matière plastique.

Plusieurs modes d'exécution de la présente invention seront décrits ci-après à titre d'exemples nullement limitatifs en référence aux dessins annexés dans lesquels:

- la figure 1 est une vue en élévation d'un manchon de consolidation conforme à l'invention;

- la figure 2 est une vue de dessus du manchon visible sur la figure 1, un piquet comportant deux ailes perpendiculaires l'une à l'autre étant représenté en traits mixtes à l'intérieur dudit manchon;

- la figure 3 est une vue de dessus d'un manchon selon une première variante de réalisation;

- la figure 4 est une vue en coupe horizontale d'un manchon selon une seconde variante de réalisation;

- la figure 5 est une vue de dessus d'un manchon selon une quatrième variante de réalisation et;

- la figure 6 est une vue en coupe horizontale d'un manchon selon une quatrième variante de réalisation.

Les manchons selon l'invention ont été mis au point pour consolider des piquets destinés à supporter des plantes et plus particulièrement de la vigne. Il va de soi cependant qu'ils pourraient être utilisés pour consolider des piquets ayant une toute autre fonction.

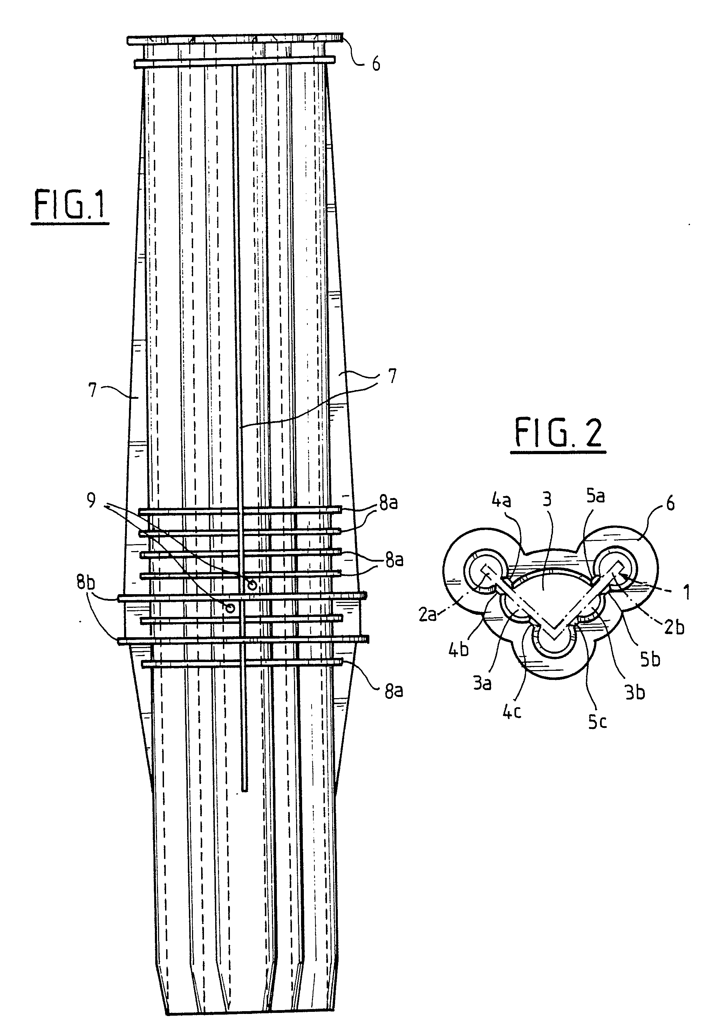

Les figures 1 à 6 représentent des manchons en matière plastique conçus pour consolider des piquets 1 comportant deux ailes 2a, 2b formant un angle droit entre elles.

Plus précisemment, la paroi du manchon visible sur les figures 1 et 2 délimite un canal longitudinal 3 comportant deux branches 3a, 3b destinées à recevoir les ailes 2a, 2b du piquet, et est pourvue de saillies internes 4a, 4b, 4c ; 5a, 5b, 5c aptes à servir de butées latérales pour les deux faces des ailes 2a, 2b lorsque le piquet 1 est enfilé dans le manchon.

Les saillies internes sont constituées par des nervures longitudinales continues s'étendant entre les extrémités opposées du manchon, mais elles pourraient éventuellement être constituées par des nervures discontinues ou même par de simples bossages.

Dans le mode de réalisation représenté sur les figures 1 et 2, les nervures 4a, 4b et 5a, 5b se font face tandis que les nervures 4c, 5c n'ont pas de nervures antagonistes devant elles.

Compte tenu de la répartition particulière de ses différentes nervures, le manchon conforme à l'invention peut assurer un maintien parfait du piquet 1. Il peut en outre être utilisé pour consolider des piquets dont le ailes seraient plus courtes ou plus longues que celles du piquet 1.

On précisera par ailleurs que le manchon visible sur les figures 1 et 2 est effilé à son extrémité inférieure destinée à être enfoncée dans le sol et qu'il est pourvu, à son extrémité supérieure, d'une bride 6 faisant saillie sur la face externe de sa paroi, cette bride étant destinée à le renforcer pour qu'il puisse être implanté dans le sol à l'aide d'un outil à main tel qu'un marteau.

On précisera également que sur la face extérieure de sa paroi, le manchon comporte des nervures longitudinales 7 s'étendant de son extrémité supérieure à une zone située entre sa partie médiane et son extrémité inférieure, ainsi que des nervure périphériques 8a, 8b s'étendant légèrement au dessous de sa partie médiane, perpendiculairement aux nervures longitudinales. Il convient de noter ici que les nervures périphériques 8b sont plus grandes que les nervures 8a et que la nervure 8b la plus proche de l'extrémité inférieure du manchon est destinée à servir de butée lors de l'enfoncement de celui-ci dans le sol.

On précisera enfin que la paroi du manchon comporte, entre les nervures périphériques 8b, des trous 9 pour permettre l'évacuation de l'eau de pluie qui pourrait s'accumuler autour du piquet consolidé.

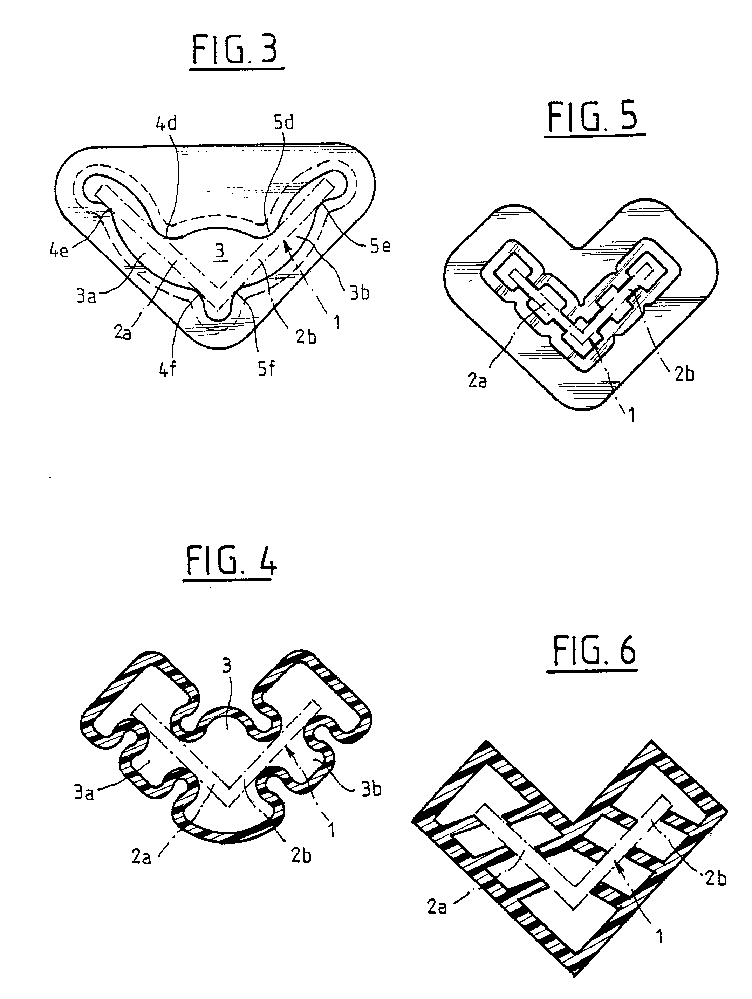

Le manchon visible sur la figure 3 se distingue du manchon qui vient d'être décrit essentiellement par le fait que les branches 3a, 3b de son canal 3 comportent chacune trois nervures longitudinales 4d, 4e, 4f respectivement 5d, 5e, 5f décalées latéralement l'une par rapport à l'autre. Plus précisemment, les nervures 4e et 4f sont destinées à servir de butées à la face externe des ailes 2a, 2b du piquet 1 alors que les nervures 4d et 5d sont destinées à servir de butées à la face interne desdites ailes.

Le manchon visible sur la figure 4 comporte un canal 3 dont les branches 3a, 3b comportent elles aussi trois nervures longitudinales décalées latéralement.

De son côtè, le manchon visible sur la figure 5 comporte un canal dont les branches comportent chacune quatre nervures longitudinales se faisant face deux à deux.

Enfin, le manchon visible sur la figure 6 comporte un canal dont les branches comportent chacune cinq nervures longitudinales, décalées latéralement l'une par rapport à l'autre, deux des nervures étant destinées à coopérer avec la face interne de l'aile correspondante du piquet et les trois autres avec la face externe de ladite aile correspondante.

Les manchons qui viennent d'être décrits ont été mis au point pour consolider des piquets comportant deux ailes formant un angle droit. Il va de soi cependant que la présente invention n'est pas limitée à des manchons destinés à la consolidation de ces piquets particuliers. Elle concerne en effet les manchons adaptables sur des piquets comportant deux ailes formant un angle différent de 90° ou sur des piquets ayant trois ailes disposées par exemple en T.

## Revendications

1) Manchon pour la consolidation d'un piquet (1) support de plante, notamment de vigne, comportant au moins deux ailes (2a, 2b) formant un angle entre elles, caractérisé en ce que sa paroi délimite un canal longitudinal (3) comportant au moins deux branches (3a, 3b) pour recevoir les ailes (2a, 2b) du piquet (1) et est pourvue de saillies internes (4a, 4f ; 5a, 5f) constituant des butées latérales pour les deux faces desdites ailes lorsque le piquet est enfilé dans le manchon.

2) Manchon selon la revendication 1, caractérisé en ce que les saillies internes (4a-4f ; 5a-5f) sont des nervures longitudinales.

3) Manchon selon la revendication 1 ou 2, caractérisé en ce qu une même branche du canal longitudinal (3) comporte au moins deux nervures longitudinales (4a-4b ; 5a-5b) se faisant face.

4) Manchon selon la revendication 1 ou 2, caractérisé en ce qu'une même branche du canal longitudinal (3) comporte au moins deux nervures longitudinales (4d, 4e ; 5d, 5e) décalées latéralement l'une par rapport l'autre.

5) Manchon selon l'une quelconque des revendications précédentes, caractérisé en ce que sa paroi est pourvue de trous (9) sensiblement équidistants de ses extrémités.

6) Manchon selon l'une quelconque des revendications précédentes, caractérisé en ce qu'il est effilé à l'une de ses extrémités et pourvu à son autre extrémité d'une bride de renforcement (6) faisant saillie sur la face externe de sa paroi.

7) Manchon selon l'une quelconque des revendications précédentes, caractérisé en ce qu'il comporte, sensiblement à mi-distance de ses extrémités, au moins une nervure de renforcement périphérique (8b) faisant saillie sur la face externe de sa paroi.

8) Manchon selon l'une quelconque des revendications précédentes, caractérisé en ce qu'il est réalisé en matière plastique.

FIG.1

FIG. 2

# FIG.3

# FIG.5

# FIG.4

# FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2563968 (KREMER)<br>* page 2, lignes 1 - 22; figure 1 *<br>--- | 1, 6 | A01G17/14 |
| A | GB-A-2123872 (HOWARD)<br>* page 2, ligne 92 - page 3, ligne 22; figures 1-6 *<br>--- | 1, 2, 8 | |
| A | US-A-2331397 (HUMMEL)<br>* le document en entier *<br>--- | 1 | |
| A | US-A-2024546 (STARKEY)<br>* le document en entier *<br>----- | 1 | |

### DOMAINES TECHNIQUES RECHERCHES (Int. Cl.5)

A01G

E04H

**Le présent rapport a été établi pour toutes les revendications**

| Lieu de la recherche | Date d'achèvement de la recherche | Examinateur |
|---|---|---|
| LA HAYE | 16 FEVRIER 1990 | HERYGERS J.J. |